# FASCICULE DE BREVET EUROPEEN

(11) **EP 0 741 519 B1**
(45) Date de publication et mention de la délivrance du brevet: **08.03.2000**
(21) Numéro de dépôt: 95941158.8
(22) Date de dépôt: 29.11.1995
(51) Int. Cl.: A01N 65/00, A01N 31/04

(54) **UTILISATION D'UNE COMBINAISON D'ALCOOL TERPENIQUE ET DE TENSIO-ACTIF NON BACTERICIDE EN TANT QUE MELANGE BACTERICIDE ET COMPOSITION EN DECOULANT**
VERWENDUNG EINER KOMBINATION AUS EINEM TERPENALKOHOL UND EINEM NICHTBAKTERIZIDEN, OBERFLÄCHENAKTIVEN STOFF ALS BAKTERIZIDE MISCHUNG UND DARAUS RESULTIERENDE ZUSAMMENSETZUNG
USE OF A COMBINATION OF A TERPENE ALCOHOL AND A NON-BACTERICIDAL SURFACTANT AS A BACTERICIDAL MIXTURE, AND RESULTING COMPOSITION

(30) Priorité: 30.11.1994 FR 9414399
(43) Date de publication de la demande: 13.11.1996
(73) Titulaire: ACTION PIN, 40100 Dax (FR)
(72) Inventeur: BARRANX, Alain, F-40180 Oeyreluy (FR); BARSACO, Michel, F-40100 Dax (FR); DUFAU, Ghislain, F-40100 Dax (FR); LAUILHE, Jean-Paul, F-40990 Saint-Paul-les-Dax (FR)
(74) Mandataire: Obolensky, Michel
(86) Numéro de dépôt international: FR9501574
(87) Numéro de publication internationale: WO9616549

(56) Documents cités:
- EP-A- 0 288 689
- EP-A- 0 467 618
- CA-A- 1 120 820
- CA-A- 1 153 267
- FR-A- 2 397 841
- US-A- 2 359 241
- CHEMICAL ABSTRACTS, vol. 115, no. 24, 16 Décembre 1991 Columbus, Ohio, US; abstract no. 258736r, & CS,A,269 725 (H. UHROVA ET AL.) 6 Février 1991

## Description

La présente invention concerne l'utilisation d'une combinaison d'alcool terpénique et d'au moins un tensio-actif non bactéricide dans une composition désinfectante ou antiseptique possédant une activité bactéricide large spectre, c'est-à-dire à la fois sur les bactéries gram-positif et gram-négatif.

Selon la présente invention, on s'intéresse aux propriétés bactéricides des alcools terpéniques, notamment ceux présents dans les huiles essentielles ou l'huile de pin.

Les huiles de pin sont constituées par des mélanges d'alcools et de carbures terpéniques. Dans ces mélanges, les proportions d'alcools et de carbures terpéniques peuvent être dans un rapport de 20/80 à 95/5, préférentiellement 50/50 à 95/5. Les alcools terpéniques sont essentiellement composés d'alcools terpéniques monocycliques (terpinéols, terpinène-1 ol-4 ...) et en plus faible proportion d'alcools terpéniques tricycliques (fenchol, bornéol ...).

L'huile de pin est connue et employée pour ses propriétés bactéricides dans des compositions désinfectantes, dans des compositions nettoyantes et désinfectantes, ainsi que dans des compositions antiseptiques. Cependant, l'activité bactéricide de telles compositions est limitée aux bactéries gram-négatif.

En effet les alcools terpéniques, en particulier ceux de l'huile de pin, en solution, en microémulsion ou en dispersion aqueuse, ne sont pas efficaces contre les micro-organismes gram-positif, tout du moins sous les formes disponibles jusqu'à présent.

Pour obtenir un désinfectant ou un antiseptique présentant un large spectre d'efficacité antibactérienne, on utilise habituellement en combinaison avec l'huile de pin, un ou plusieurs composés présentant une activité bactéricide contre les microorganismes gram-positif.

De façon classique, ces matières actives bactéricides sont choisies parmi les ammoniums quaternaires, les dérivés phénoliques, les aldéhydes, etc. Ces composés présentent toutefois l'inconvénient majeur d'être trop dangereux à certaines concentrations et ne sont donc pas suffisamment inoffensifs vis-à-vis de l'utilisateur. EP-A-467618, EP-A-288689, FR-A-2397841, US-A-2359241, CA-A-1120820, CA-A-1153267 et CS-A-269725 divulguent des compositions désinfectantes qui contiennent de l'huile de pin en combinaison avec des agents tension-actifs et des autres bactéricides tels que des composés phénoliques, des ammoniums quaternaires etc.

La présente invention a pour but de fournir une composition désinfectante ou antiseptique ne faisant pas appel à des matières actives bactéricides autres que des alcools terpéniques, notamment ceux contenus dans l'huile de pin, telles que les composés ci-dessus.

A cet effet, l'invention a pour objet l'utilisation d'une combinaison (i) d'au moins un alcool terpénique et (ii) d'au moins un tensio-actif non bactéricide choisi parmi les alkylsulfates de métal alcalin, les alkyléthersulfates de métal alcalin, les alkylsulfonates de métal alcalin, les alcanes sulfonates secondaires de métal alcalin, les alkylarylsulfonates de métal alcalin, les α-oléfine sulfonates de métal alcalin, les alkyléthersulfonates de métal alcalin, les alkylsulfosuccinates de métal alcalin, les alkyléthersulfosuccinates de métal alcalin, les sels de métal alcalin des esters d'acides gras α-sulfonés, les bétaïnes, les alkylglucosides, les alkylpolyglucosides et les esters organiques de tensio-actifs non ioniques alcoxylés,
en tant que mélange bactéricide ou antiseptique actif à la fois sur les bactéries gram-négatif et gram-positif.

Par "tensio-actif non bactéricide", on entend un tensio-actif qui n'a pas d'activité bactéricide à la dose à laquelle il est amené par dilution de la composition désinfectante ou antiseptique à la dose d'efficacité de cette dernière.

En effet, contrairement à ce qui était communément admis, les présents inventeurs ont découvert qu'il est possible d'obtenir un produit désinfectant ou antiseptique actif contre les microorganismes gram-négatif et gram-positif en associant simplement l'huile de pin, ou un de ses constituants à savoir un alcool terpénique, à un ou des tensio-actifs dépourvus d'activité bactéricide à la dose décrite précédemment.

Comme agent bactéricide, on peut utiliser (i) un mélange d'alcools terpéniques, contenant notamment 30 à 100 % en poids d'alcools terpéniques monocycliques, de préférence 80 à 95 %. En particulier, on peut utiliser un mélange contenant de 70 à 100 % en poids de terpinéols, de préférence 80 à 90 %.

Avantageusement, on peut utiliser (i) un mélange comprenant au moins un alcool terpénique et au moins un carbure terpénique.

De préférence, les proportions pondérales d'alcool(s) terpénique(s) et de carbure(s) terpénique(s) sont dans un rapport de 20/80 à 95/5, plus particulièrement 50/50 à 95/5.

En ce cas, on peut utiliser comme mélange (i) de l'huile de pin. Cette dernière peut être d'origine naturelle ou de synthèse, obtenue par exemple par hydratation catalytique de l'a-pinène.

De préférence, les tensio-actifs (ii) de type sels de métal alcalin employés sont choisis parmi les sels de sodium et de potassium.

On préfère particulièrement les alkylsulfates de sodium en C₈-C₂₂, notamment le laurylsulfate de sodium, et les alkyléthersulfates de sodium en C₈-C₂₂, notamment le lauryl éther sulfate de sodium.

De même, on préfère particulièrement les alkylsulfonates de sodium en C₈-C₂₂ , les alcanes sulfonates secondaires de sodium en C₁₃-C₁₈ ou paraffine sulfonate de sodium, les alkyl éther sulfonates de sodium en C₈-C₂₂, et les alkyl(C₉-C₁₅)arylsulfonates de sodium, notamment le dodécylbenzènesulfonate de sodium, et les α-oléfine sulfonates de sodium en C₁₂-C₂₀.

Parmi les sulfosuccinates, on préfère les alkyl et dialkylsulfosuccinates de sodium en C₈-C₂₂, notamment les dioctylsulfosuccinates de sodium où la chaîne octyle peut être droite ou ramifiée, ainsi que les alkyléthersulfosuccinates de sodium en C₈-C₂₂, notamment un lauryl éthersulfosuccinate de sodium.

Parmi les sels de métal alcalin des esters d'acides gras α-sulfonés, on peut citer des sels alcalins des esters, notamment méthyliques, d'acide gras en C₈-C₂₂ α-sulfoné, notamment des sels de sodium de 2-sulfolaurate d'alkyle.

Les bétaïnes utilisables sont de préférence des alkylamidobétaïnes en C₈-C₂₂ où la chaîne alkyle est avantageusement dérivée d'acides de coco.

Le tensio-actif peut également être avantageusement choisi parmi les alkylglucosides et les alkylpolyglucosides, qui sont les produits de réaction d'un alcool et d'un ose ou d'un polyose.

On peut citer notamment les produits répondant à la formule suivante : 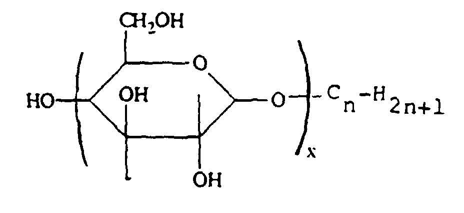 dans laquelle x vaut 1 à 6 et n vaut 4 à 18.

Les tensio-actifs de type esters organiques de tensio-actifs non-ioniques alcoxylés utilisés peuvent être notamment des mono, di ou triesters dérivés d'hydroxyacides polycarboxyliques du type acides citrique ou tartrique, en particulier des diesters citriques et monoesters tartriques. On préfère les produits comprenant une chaîne de tensio-actif non-ionique alcoxylé de type R-O[(CH₂)ₘ-O]ₙ où R est un groupe alkyle en C₄-C₂₀, m vaut 2 ou 3 et n est compris entre 1 et 20. Les produits obtenus par condensation d'une ou plusieurs chaînes d'alcools gras alcoxylés avec un hydroxyacide polycarboxylique peuvent être présentés sous formes acide ou neutralisée. On utilise préférentiellement les tensio-actifs obtenus par condensation d'alcool laurique éthoxylé avec de l'acide citrique ou de l'acide tartrique.

Selon l'invention, on peut utiliser simplement au moins un alcool terpénique, éventuellement en mélange avec au moins un carbure terpénique, et au moins un tensio-actif non bactéricide pour préparer une composition désinfectante ou antiseptique à large spectre bactéricide. Avantageusement, la composition se présente sous la forme d'une dispersion, d'une microémulsion ou d'une solution aqueuse de composés terpéniques, le tensio-actif ayant pour effet de disperser, de microémulsionner ou de solubiliser ces composés dans la phase aqueuse dans laquelle ils sont ordinairement insolubles. Elle peut également se présenter sous forme d'un concentré émulsionnable ou diluable, comprenant simplement les matières actives terpéniques et tensio-actives. Une dispersion, microémulsion ou solution aqueuse peut être préparée à partir d'un tel concentré par dispersion ou dilution dans l'eau.

De préférence, la composition comprend (i) de 2 à 90 %, en particulier 5 à 90 % en poids d'alcool(s) terpénique(s), seul(s) ou en mélange avec un (des) carbure(s) terpénique(s), (ii) de 2 à 50 %, en particulier 5 à 50 % en poids de tensio-actif(s) non bactéricide(s), le reste étant éventuellement constitué (iii) d'eau dans le cas d'une dispersion ou d'une solution aqueuse.

Une composition particulièrement préférée comprend (i) 5 à 20 % en poids d'au moins un desdits composés terpéniques, notamment d'huile de pin, (ii) 5 à 20 % en poids de tensio-actif (s) non bactéricide(s), l'eau représentant le complément.

Avantageusement, on utilise en outre un co-solvant non bactéricide, qui a pour seul effet de parfaire la dispersion des composés terpéniques dans l'eau. Un co-solvant de choix peut être un alcool, notamment l'isopropanol ou l'éthanol; ou un éther de glycol.

De préférence, le co-solvant représente 5 à 20 % du poids de la composition, en particulier environ 10 %.

Le co-solvant est utilisé pour son rôle d'adjuvant de solubilisation, de microémulsification ou d'émulsification afin d'améliorer l'aspect de la composition. Celle-ci peut alors se présenter sous forme de microémulsion dans le cas d'une dispersion. Ce n'est pas un ingrédient actif bactéricide à la dose à laquelle il est amené par dilution de la composition désinfectante ou antiseptique à la dose d'efficacité de cette dernière, et il n'a pas d'effet particulier sur l'efficacité de la composition finale.

Plusieurs tensio-actifs non bactéricides peuvent être employés simultanément. On note en particulier un effet de synergie très avantageux lors de l'utilisation conjointe de paraffine sulfonate de métal alcalin et de lauryléthersulfate de métal alcalin, le métal alcalin étant de préférence le sodium.

En effet, un mélange de ces tensio-actifs permet de conférer à une composition à base d'alcool terpénique, ou d'un mélange d'alcool et de carbure terpénique, une efficacité supérieure à celle d'une composition ne contenant qu'un seul des tensio-actifs en quantité égale à la quantité totale de tensio-actifs présente dans le mélange.

Cet effet de synergie se manifeste à la fois pour l'activité contre les microorganismes gram-négatif et les microorganismes gram-positif.

La présente invention a également pour objet les compositions dérivant de l'utilisation d'une combinaison desdits composés terpéniques et d'au moins un tensio-actif non bactéricide telle que décrite précédemment, et ne contenant pas d'autre composé bactéricide.

En particulier, l'invention a pour objet une composition désinfectante ou antiseptique possédant une activité bactéricide à la fois sur les bactéries gram-négatif et gram-positif, ne contenant pas de dérivés phénoliques ni d'ammoniums quaternaires, et comprenant
(i) de 2 à 90 % en poids d'au moins un alcool terpénique, éventuellement en mélange avec au moins un carbure terpénique,
(ii) de 2 à 50 % en poids d'un tensio-actif ou d'un mélange de tensio-actifs non bactéricides choisi parmi les alkylsulfates de métal alcalin, les alkyléthersulfates de métal alcalin, les alkylsulfonates de métal alcalin, les alcanes sulfonates secondaires de métal alcalin, les alkylarylsulfonates de métal alcalin, les α-oléfine sulfonates de métal alcalin, les alkyléthersulfonates de métal alcalin, les alkylsulfosuccinates de métal alcalin, les alkyléthersulfosuccinates de métal alcalin, les sels de métal alcalin des esters d'acides gras α-sulfonés, les bétaïnes, les alkylglucosides, les alkylpolyglucosides et les esters d'acides organiques de tensio-actifs non ioniques alcoxylés,
le reste étant constitué par de l'eau dans le cas d'une dispersion, d'une microémulsion ou d'une solution aqueuse.

Une composition avantageuse comprend (i) de l'huile de pin et (ii) un mélange de paraffine sulfonate de métal alcalin et de lauryléthersulfate de métal alcalin, le métal alcalin étant de préférence le sodium.

L'utilisation combinée desdits composés terpéniques et de tensio-actif(s) non bactéricide(s) selon la présente invention permet de réduire la quantité d'actifs bactéricides présente dans une composition désinfectante ou antiseptique. En effet, les seuls ingrédients possédant une activité bactéricide intrinsèque dans une telle composition sont les alcools terpéniques, éventuellement en mélange avec des carbures terpéniques, qui voient leur spectre d'activité élargi. Dans le cas de produits nettoyants-désinfectants, on réduit ainsi avantageusement les rejets de matières liés à l'utilisation de la composition.

Selon leurs teneurs en alcool terpénique et en tensio-actif non bactéricide, les compositions selon l'invention sont efficaces à l'état pur ou à des doses d'emploi relativement faibles correspondant à une dilution dans l'eau de la composition inférieure à 5 %. Lorsqu'il s'agit de compositions nettoyantes désinfectantes, cette dose d'utilisation est pleinement satisfaisante du point de vue du pouvoir nettoyant.

Les exemples suivants illustrent l'invention.

### Exemple 1

Une composition nettoyante est préparée à partir d'huile de pin et de dodécyl benzène sulfonate de sodium conformément à l'invention.

L'huile de pin utilisée est commercialisée sous la marque DERTOL® 90 par la Société Les Dérives Résiniques et Terpéniques, et constituée d'un mélange d'alcools et de carbures terpéniques dont la teneur en alcools terpéniques est comprise entre 88 et 93 % en poids.

Le dodécylbenzène sulfonate de sodium employé est un produit de marque NANSA® SS 50-F, commercialisé par la Société ALBRIGHT & WILSON.

La formule de la composition est la suivante (les pourcentages étant exprimés en % en poids de matière active) :

| | |
|---|---|
| Huile de pin | 20 % |
| Dodécylbenzène sulfonate de sodium | 20 % |
| Isopropanol | 10 % |
| Eau | 50 %. |

L'efficacité bactéricide de la composition est mesurée conformément à la norme AFNOR NFT 72-151.

Deux souches bactériennes sont choisies parmi les souches AFNOR comme étant représentatives des bactéries gram-positif et gram-négatif habituellement résistantes aux désinfectants.

Pour les bactéries gram-négatif, on choisit *Pseudomonas aeruginosa,* reconnu pour sa résistance dans les essais sur les désinfectants (souche CIP A22 - Institut Pasteur).

Pour les bactéries gram-positif, on choisit *Enterococcus hirae* pour les mêmes raisons (souche CIP 5855 - Institut Pasteur).

En vue de l'essai, ces souches sont entretenues selon la norme AFNOR NFT 72-140.

Pour la détermination de l'effet bactéricide, les souches bactériennes sont mises en présence de la composition à diverses dilutions dans l'eau distillée.

En vue de son utilisation ultérieure en tant que nettoyant, la composition de l'exemple 1 a été testée aux dilutions de 2 % et 4 % en volume, qui représentent des concentrations acceptables pour une utilisation courante.

La composition est active à une dilution de 4 %, et est encore active à une dilution de 2 %, contre les bactéries gram-négatif et gram-positif. Le tableau 1 récapitule l'efficacité de cette composition exprimée par son activité aux doses d'essai.

**TABLEAU 1**

| Dilution de la composition | Activité sur bactéries gram-*(Pseudomonas aeruginosa)* | Activité sur bactéries gram+ *(Enterococcus hirae)* |
|---|---|---|
| 4 % | active | active |
| 2 % | active | active |

### Exemples 2 à 12

Des compositions analogues à celle de l'exemple 1 ont été préparées en remplaçant le dodécylbenzène sulfonate de sodium par divers tensioactifs non bactéricides.

La formule de la composition reste la suivante (les pourcentages étant exprimés en % en poids de matière active) :

| | |
|---|---|
| Huile de pin | 20 % |
| Tensioactif | 20 % |
| Isopropanol | 10 % |
| Eau | 50 %. |

L'activité bactéricide de la composition est déterminée suivant le protocole AFNOR NFT 72-151 comme dans l'exemple 1 et les résultats sont reportés dans le tableau 2 ci-après, qui présente pour chaque exemple le tensioactif utilisé et l'activité sur gram+ et gram- des compositions aux dilutions indiquées.

On vérifie dans chaque cas qu'une composition témoin contenant le tensioactif mais pas d'huile de pin est inactive, aux mêmes dilutions, contre les microorganismes en question.

La formule de cette composition est la suivante:

| | |
|---|---|
| Tensioactif | 20 % |
| Isopropanol | 10 % |
| Eau | 70 %. |

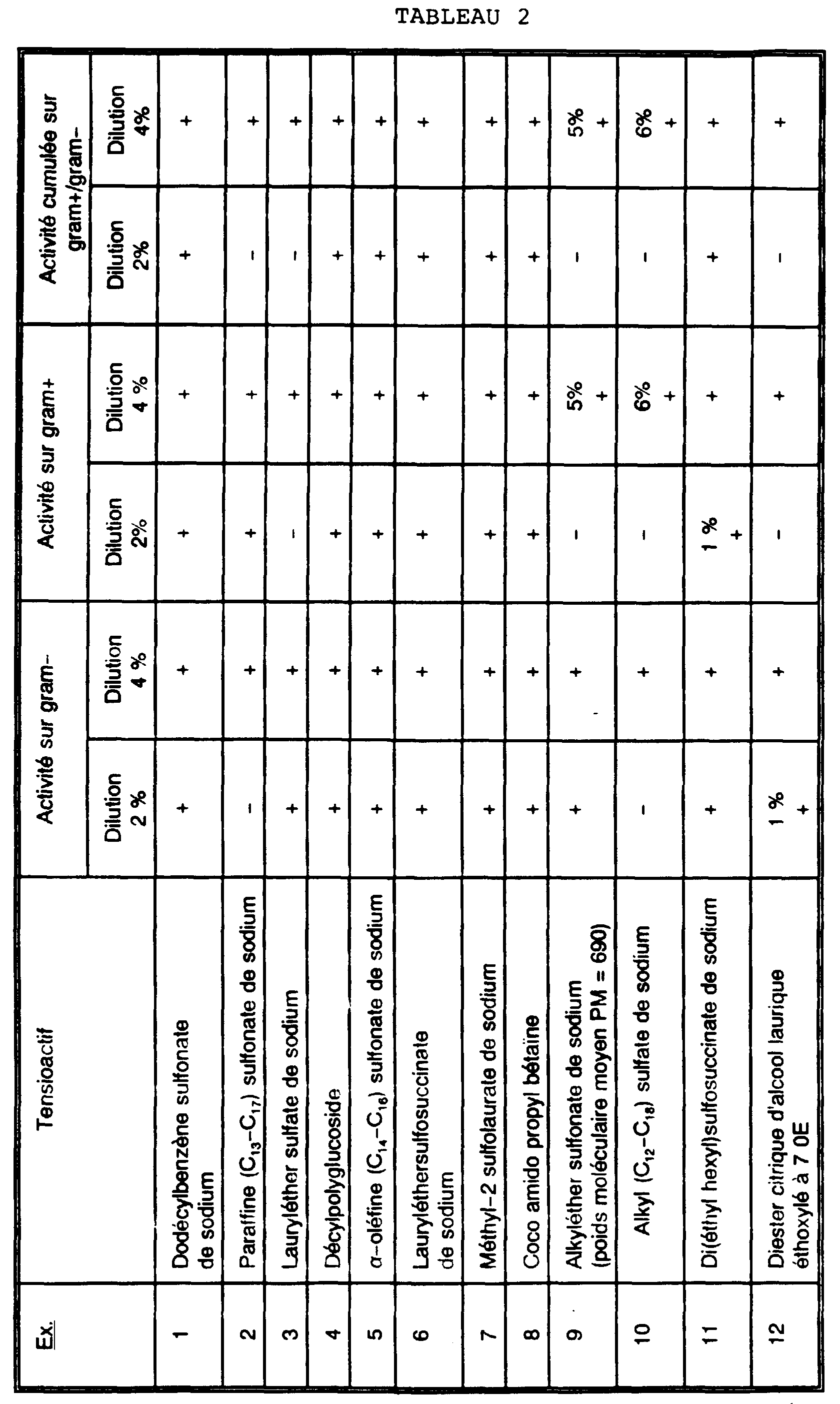

Dans ce tableau, le signe - signifie que la composition est inactive contre les bactéries considérées, et le signe + signifie que la composition est active contre les bactéries considérées.

Les compositions des exemples 1 à 12 sont donc toutes actives contre les bactéries gram-négatif et gram-positif à une dilution de 2 à 6 % compatible avec une utilisation efficace du point de vue du pouvoir nettoyant.

### Exemples 13 à 15

Ces exemples illustrent l'effet synergique qui se produit en utilisant conjointement du paraffine sulfonate de sodium et du lauryléthersulfate de sodium, dans une composition selon l'invention.

Les formulations des compositions des exemples 13 à 15 sont reportées dans le tableau 3 ci-dessous (les pourcentages étant exprimés en % en poids de matière active) :

**TABLEAU 3**

| Composition | Exemple 13 | Exemple 14 | Exemple 15 |
|---|---|---|---|
| Huile de pin | 20 % | 20 % | 20 % |
| Paraffine (C₁₃-C₁₇)-sulfonate de sodium | 14 % | 10 % | 6 % |
| Lauryléthersulfate de sodium | 6 % | 10 % | 14 % |
| Isopropanol | 10 % | 10 % | 10 % |
| Eau | 50 % | 50 % | 50 % |

Les compositions des exemples 2, 3, 13, 14 et 15 sont soumises à l'essai de détermination de l'activité bactéricide suivant la norme AFNOR NFT 72-151, à diverses dilutions. Les résultats sont reportés dans le tableau 4 ci-dessous.

Dans ce tableau, le signe - signifie que la composition est inactive contre les bactéries considérées, et le signe + signifie que la composition est active contre les bactéries considérées.

**TABLEAU 4**

| Composition | Activité sur gram- (*Pseudomonas aeruginosa)* | | Activité sur gram+ *(Enterococus hirae)* | | Activité cumulée sur gram+/gram- |
|---|---|---|---|---|---|
| | Dilution 2 % | Dilution 4% | Dilution 2% | Dilution 4% | Dilution 2% |
| Ex. 2 | - | + | + | + | - |
| Ex. 3 | + | + | - | + | - |
| Ex. 13 | + | + | + | + | + |
| Ex. 14 | + | + | + | + | + |
| Ex. 15 | + | + | + | + | + |

Ces résultats montrent que l'on peut abaisser à 2 % la dilution efficace de la composition contenant un mélange de deux tensio-actifs pour obtenir une activité contre les bactéries gram+ et gram-, alors que les compositions des exemples 2 et 3 contenant la même quantité de matière active ne sont pas efficaces à cette dilution (mais elles le sont toutefois à une dilution de 4 % ).

## Revendications

1. Utilisation d'une combinaison
(i) d'au moins un alcool terpénique et
(ii) d'au moins un tensio-actif non bactéricide choisi parmi les alkylsulfates de métal alcalin, les alkyléthersulfates de métal alcalin, les alkylsulfonates de métal alcalin, les alcanes sulfonates secondaires de métal alcalin, les alkylarylsulfonates de métal alcalin, les α-oléfine sulfonates de métal alcalin, les alkyléthersulfonates de métal alcalin, les alkylsulfosuccinates de métal alcalin, les alkyléthersulfosuccinates de métal alcalin, les sels de métal alcalin des esters d'acides gras α-sulfonés, les bétaïnes, les alkylglucosides, les alkylpolyglucosides et les esters organiques de tensio-actifs non ioniques alcoxylés,
en tant que mélange bactéricide actif à la fois sur les bactéries gram- négatif et gram- positif, sous réserve que ledit mélange soit exempt d'agents chélatants en milieu alcalin, de composés d'ammoniums quaternaires, de composés phénoliques germicides et d'acides organiques solubles dans l'huile.

2. Utilisation selon la revendication 1 d'une combinaison
(i) d'au moins un alcool terpénique et
(ii) d'au moins un tensio-actif non bactéricide choisi parmi les alkylsulfates de métal alcalin, les alkyléthersulfates de métal alcalin, les alkylsulfonates de métal alcalin, les alcanes sulfonates secondaires de métal alcalin, les alkyléthersulfonates de métal alcalin, les alkylarylsulfonates de métal alcalin, les alkylglucosides et alkylpolyglucosides,
en tant que mélange bactéricide actif à la fois sur les bactéries gram- négatif et gram- positif, sous réserve que ledit mélange soit exempt d'agents chélatants en milieu alcalin, de composés d'ammoniums quaternaires, de composés phénoliques germicides et d'acides organiques solubles dans l'huile.

3. Utilisation d'une combinaison selon l'une des revendications 1 ou 2, comprenant (i) un mélange d'alcools terpéniques, contenant de 30 à 100% en poids d'alcools terpéniques monocycliques.

4. Utilisation d'une combinaison selon l'une des revendications 1 à 3, comprenant (i) un mélange d'au moins un alcool terpénique et d'au moins un carbure terpénique.

5. Utilisation selon la revendication 4, selon laquelle les proportions pondérales d'alcool(s) terpénique(s) et de carbure(s) terpénique(s) sont dans un rapport de 20/80 à 95/5.

6. Utilisation selon l'une des revendications 4 ou 5, selon laquelle le mélange (i) est de l'huile de pin.

7. Utilisation selon l'une quelconque des revendications précédentes, d'une combinaison (i) d'huile de pin et (ii) d'au moins un tensio-actif choisi parmi les lauryl éther sulfates de sodium, paraffine sulfonates de sodium, dodécylbenzène sulfonate de sodium, décylpolyglucoside, laurylsulfate de sodium, lauryléther sulfosuccinate de sodium, sels de sodium de 2-sulfolaurate d'alkyle, α-oléfine sulfonates de sodium, alkyléther sulfonates de sodium, dialkyl sulfosuccinates de sodium, esters citrique ou tartrique d'acide laurique éthoxylé et les alkylamidobétaïnes.

8. Utilisation selon la revendication 7 d'une combinaison (i) d'huile de pin et (ii) d'un mélange de paraffine sulfonate de sodium et de lauryléthersulfate de sodium.

9. Utilisation selon la revendication 1, selon laquelle la composition désinfectante ou antiseptique comprend (i) 2 à 90 % en poids d'au moins un alcool terpénique, éventuellement en mélange avec au moins un carbure terpénique, et (ii) 2 à 50 % en poids de tensio-actif non bactéricide, le reste étant éventuellement constitué par (iii) de l'eau.

10. Utilisation selon la revendication 9 , selon laquelle ladite composition comprend (i) 5 à 20 % en poids d'huile de pin, (ii) 5 à 20 % en poids de tensio-actif(s) non bactéricide(s), l'eau représentant le complément.

11. Utilisation selon la revendication 1, selon laquelle la composition comprend en outre (iv) un co-solvant non bactéricide

12. Utilisation selon la revendication 11, selon laquelle le co-solvant est un alcool, notamment l'isopropanol ou l'éthanol, ou un éther de glycol.

13. Utilisation selon lune des revendications 11 ou 12, selon laquelle le co-solvant représente 5 à 20 % en poids de la composition.

14. Composition désinfectante ou antiseptique possédant une activité bactéricide à la fois sur les bactéries gram-négatif et gram-positif, ne contenant pas de dérivés phénoliques ni d'ammoniums quaternaires, et comprenant comme actif bactéricide un mélange de
(i) 2 à 90 % en poids d'au moins un alcool terpénique, éventuellement en mélange avec au moins un carbure terpénique et
(ii) 2 à 50 % en poids d'au moins un tensio-actif non bactéricide choisi parmi les alkylsulfates de métal alcalin, les alkyléthersulfates de métal alcalin, les alkylsulfonates de métal alcalin, les alcanes sulfonates secondaires de métal alcalin, les alkylarylsulfonates de métal alcalin, les α-oléfine sulfonates de métal alcalin, les alkyléthersulfonates de métal alcalin, les alkylsulfosuccinates de métal alcalin, les alkyléthersulfosuccinates de métal alcalin, les sels de métal alcalin des esters d'acides gras α-sulfonés, les bétaïnes, les alkylglucosides, les alkylpolyglucosides et les esters organiques de tensio-actifs non ioniques alcoxylés,
le reste étant éventuellement constitué par (iii) de l'eau,
ladite composition étant exemple d'agents chélatants en milieu alcalin, de composés d'ammoniums quaternaires, de composés phénoliques germicides, d'acides organiques solubles dans l'huile et de propylèneglycol.

15. Composition selon la revendication 14, comprenant comme actif bactéricide un mélange de
(i) 5 à 90% en poids d'au moins un alcool terpénique, éventuellementen mélange avec au moins un carbure terpénique et
(ii) 5 à 50 % en poids d'au moins un tensio-actif non bactéricide choisi parmi les alkylsulfates de métal alcalin, les alkyléthersulfates de métal alcalin, les alkylsulfonates de métal alcalin les alcanes sulfonates secondaires de métal alcalin, les alkyléthersulfonates de métal alcalin, les alkylarylsulfonates de métal alcalin, les alkylglucosides et alkylpolyglucosides;
le reste étant éventuellement constitué par
(iii) de l'eau.

16. Composition selon la revendication 15 comprenant (i) de l'huile de pin et (ii) au moins un tensio-actif choisi parmi les lauryl éther sulfates de sodium, paraffine sulfonates de sodium, dodécylbenzène sulfonate de sodium, décylpolyglucoside, laurylsulfate de sodium, lauryléther sulfosuccinate de sodium, sels de sodium de 2-sulfolaurate d'alkyle, α-oléfine sulfonates de sodium, alkyléther sulfonates de sodium, dialkyl sulfosuccinates de sodium, esters citrique ou tartrique d'acide laurique éthoxylé et les alkylamidobétaïnes.

17. Composition selon la revendication 15 ou 16, comprenant en outre (iv) 5 à 20 % d'un co-solvant non bactéricide.

## Claims

1. Use of a combination
(i) of at least one terpene alcohol and
(ii) at least one non-bactericidal surfactant selected from among the alkali metal alkyl sulphates, the alkali metal alkyl ether sulphates, the alkali metal alkyl sulphonates, the alkali metal secondary alkane sulphonates, the alkali metal alkylaryl sulphonates, the alkali metal α-olefin sulphonates, the alkali metal alkyl ether sulphonates, the alkali metal alkyl sulphosuccinates, the alkali metal alkyl ether sulphosuccinates, the alkali metal salts of α-sulphonated fatty acid esters, the betaines, the alkyl glucosides, the alkyl polyglucosides and the organic esters of alkoxylated non-ionic surfactants,
as a bactericidal mixture which is active on both gram-negative and gram-positive bacteria, with the proviso that said mixture is free from chelating agents in an alkaline medium, quaternary ammonium compounds, germicidal phenol compounds and organic acids which are soluble in oil.

2. Use according to claim 1 of a combination
(i) of at least one terpene alcohol and
(ii) of at least one non-bactericidal surfactant selected from among the alkali metal alkyl sulphates, alkali metal alkyl ether sulphates, alkali metal alkyl sulphonates, alkali metal secondary alkane sulphonates, alkali metal alkyl ether sulphonates, alkali metal alkylaryl sulphonates, the alkyl glucosides and alkyl polyglucosides,
as a bactericidal mixture which is active on both gram-negative and gram-positive bacteria, with the proviso that said mixture is free from chelating agents in an alkaline medium, quaternary ammonium compounds,
germicidal phenol compounds and organic acids which are soluble in oil.

3. Use of a combination according to one of claims 1 and 2 comprising (i) a mixture of terpene alcohols containing 30 to 100% by weight of monocyclic terpene alcohols.

4. Use of a combination according to one of claims 1 to 3 comprising (i) a mixture of at least one terpene alcohol and at least one terpene carbide.

5. Use according to claim 4, according to which the proportions by weight of terpene alcohol(s) and terpene carbide(s) are in a ratio of 20/80 to 95/5.

6. Use according to one of claims 4 or 5, characterised in that the mixture (i) is pine oil.

7. Use according to any one of the preceding claims, of a combination (i) of pine oil and (ii) at least one surfactant selected from among the sodium lauryl ether sulphates, sodium paraffin sulphonates, sodium dodecyl benzenesulphonate, decyl polyglucoside, sodium lauryl sulphate, sodium laurylether succinate, sodium salts of alkyl 2-sulpholaurate, sodium α-olefin sulphonates, sodium alkyl ether sulphonates, sodium dialkyl sulphosuccinates, citric or tartaric esters of ethoxylated lauric acid and the alkylamido betaines.

8. Use according to claim 7 of a combination (i) of pine oil and (ii) of a mixture of sodium paraffin sulphonate and sodium lauryl ether sulphate.

9. Use according to claim 1, according to which the disinfectant or antiseptic composition comprises (i) 2 to 90% by weight of at least one terpene alcohol, optionally mixed with at least one terpene carbide, and (ii) 2 to 50% by weight of non-bactericidal surfactant, the remainder optionally consisting of (iii) water.

10. Use according to claim 9, according to which said composition comprises (i) 5 to 20% by weight of pine oil, (ii) 5 to 20% by weight of non-bactericidal surfactant(s), water constituting the remainder.

11. Use according to claim 1, according to which the composition further comprises (iv) a non-bactericidal co-solvent.

12. Use according to claim 11, according to which the co-solvent is an alcohol, particularly isopropanol or ethanol, or a glycol ether.

13. Use according to one of claims 11 and 12, wherein the co-solvent constitutes 5 to 20% by weight of the composition.

14. Disinfectant or antiseptic composition having a bactericidal effect on both gram-negative and gram-positive bacteria, containing no phenolic derivatives or quaternary ammonium compounds and comprising as bactericidal active agent a mixture of
(i) 2 to 90% by weight of at least one terpene alcohol, optionally mixed with at least one terpene carbide and
(ii) 2 to 50% by weight of at least one non-bactericidal surfactant selected from among the alkali metal alkyl sulphates, the alkali metal alkyl ether sulphates, the alkali metal alkyl sulphonates, the alkali metal secondary alkane sulphonates, the alkali metal alkylaryl sulphonates, the alkali metal α-olefin sulphonates, the alkali metal alkyl ether sulphonates, the alkali metal alkyl sulphosuccinates, the alkali metal alkyl ether sulphosuccinates, the alkali metal salts of α-sulphonated fatty acid esters, the betaines, the alkyl glucosides, the alkyl polyglucosides and the organic esters of alkoxylated non-ionic surfactants, the remainder optionally consisting of (iii) water, said composition being free from chelating agents in an alkaline medium, quaternary ammonium compounds, germicidal phenolic compounds, organic acids which are soluble in oil and propylene glycol.

15. Composition according to claim 14, comprising as bactericidal active agent, a mixture of
(i) 5 to 90% by weight of at least one terpene alcohol, optionally mixed with at least one terpene carbide and
(ii) 5 to 50% by weight of at least one non-bactericidal surfactant selected from among the alkali metal alkyl sulphates, alkali metal alkyl ether sulphates, alkali metal alkyl sulphonates, alkali metal secondary alkane sulphonates, alkali metal alkyl ether sulphonates, alkali metal alkylaryl sulphonates, the alkyl glucosides and alkyl polyglucosides; the remainder optionally consisting of
(iii) water.

16. Composition according to claim 15 comprising (i) pine oil and (ii) at least one surfactant selected from among the sodium lauryl ether sulphates, sodium paraffin sulphonates, sodium dodecyl benzenesulphonate, decyl polyglucoside, sodium lauryl sulphate, sodium laurylether succinate, sodium salts of alkyl 2-sulpholaurate, sodium α-olefin sulphonates, sodium alkyl ether sulphonates, sodium dialkyl sulphosuccinates, citric or tartaric esters of ethoxylated lauric acid and the alkylamido betaines.

17. Composition according to claim 15 or 16, further comprising (iv) 5 to 20% of a non-bactericidal co-solvent.

## Patentansprüche

1. Verwendung einer Kombination aus
(i) mindestens einem Terpenalkohol und
(ii) mindestens einem nicht-bakteriziden oberflächenaktiven Mittel ausgewählt aus Alkalimetall-alkylsulfaten, Alkalimetall-alkylethersulfaten, Alkalimetall-alkylsulfonaten, sekundären Alkalimetall-alkansulfonaten, Alkalimetall-alkylarylsulfonaten, Alkalimetall-α-olefinsulfonaten, Alkalimetall-alkylethersulfonaten, Alkalimetall-alkylsulfosuccinaten, Alkalimetall-alkylethersulfosuccinaten, Alkalimetallsalzen von α-sulfonierten Fettsäuren. Betainen, Alkylglucosiden, Alkylpolyglucosiden und organischen Estern von alkoxylierten nichtionischen oberflächenaktiven Mitteln,
als bakterizide Mischung, die zugleich gegenüber gram-negativen als auch gram-positiven Bakterien wirksam ist, mit der Maßgabe, daß die Mischung frei ist von in alkalischem Medium chelatbildenden Mitteln, quaternären Ammoniumverbindungen, germiziden Phenolverbindungen und öllöslichen organischen Säuren.

2. Verwendung nach Anspruch 1 einer Kombination aus
(i) mindestens einem Terpenalkohol und
(ii) mindestens einem nichtbakteriziden oberflächenaktiven Mittel ausgewählt aus Alkalimetall-alkylsulfaten, Alkalimetall-alkylethersulfaten, Alkalimetall-alkylsulfonaten, sekundären Alkalimetall-alkansulfonaten, Alkalimetall-alkylethersulfonaten, Alkalimetall-alkylarylsulfonaten, Alkylglucosiden und Alkylpolyglucosiden,
als bakterizide Mischung, die zugleich gegenüber gram-negativen als auch gram-positiven Bakterien wirksam ist, mit der Maßgabe, daß die Mischung frei ist von in alkalischem Medium chelatbildenden Mitteln, quaternären Ammoniumverbindungen, germiziden Phenolverbindungen und öllöslichen organischen Säuren.

3. Verwendung einer Kombination nach einem der Ansprüche 1 oder 2 enthaltend (i) eine Mischung aus Terpenalkoholen, die 30 bis 100 Gew.-% monocyclischer Terpenalkohole enthält.

4. Verwendung einer Kombination nach einem der Ansprüche 1 bis 3 enthaltend (i) eine Mischung aus mindestens einem Terpenalkohol und mindestens einem Terpenkohlenwasserstoff.

5. Verwendung nach Anspruch 4, worin die Gewichtsverhältnisse von Terpenalkohol(en) zu Terpenkohlenwasserstoff(en) einem Verhältnis von 20/80 bis 95/5 entsprechen.

6. Verwendung nach einem der Ansprüche 4 oder 5, worin die Mischung (i) Pine Oil ist.

7. Verwendung nach irgendeinem der vorhergehenden Ansprüche einer Kombination aus (i) Pine Oil und (ii) mindestens einem oberflächenaktiven Mittel ausgewählt aus Natriumlaurylethersulfaten, Natriumparaffinsulfonaten, Natriumdodecylbenzolsulfonat, Decylpolyglucosid, Natriumlaurylsulfat, Natriumlaurylethersulfosuccinat, Natriumsalzen von Alkyl-2-sulfolaurat, Natrium-α-olefinsulfonaten, Natriumalkylethersulfonaten, Natriumdialkylsulfosuccinaten, Citronensäure- oder Weinsäureester von ethoxylierter Laurinsäure und Alkylamidobetainen.

8. Verwendung nach Anspruch 7 einer Kombination aus (i) Pine Oil und (ii) einer Mischung aus Natriumparaffinsulfonat und Natriumlaurylethersulfat.

9. Verwendung nach Anspruch 1, worin die desinfizierende oder antiseptische Zusammensetzung (i) 2 bis 90 Gew.-% mindestens eines Terpenalkohols, gegebenenfalls in Mischung mit mindestens einem Terpenkohlenwasserstoff, und (ii) 2 bis 50 Gew.-% eines nichtbakteriziden oberflächenaktiven Mittels umfaßt, wobei der Rest gegebenenfalls durch (iii) Wasser gebildet wird.

10. Verwendung nach Anspruch 9, worin die Zusammensetzung (i) 5 bis 20 Gew.- % Pine Oil, (ii) 5 bis 20 Gew.-% nichtbakterizide(s) oberflächenaktive(s) Mittel und Wasser als Rest umfaßt.

11. Verwendung nach Anspruch 1, worin die Zusammensetzung zusätzlich (iv) ein nichtbakterizides Co-Lösungsmittel enthält.

12. Verwendung nach Anspruch 1 1, worin das Co-Lösungsmittel ein Alkohol, insbesondere Isopropanol oder Ethanol, oder ein Glykolether ist.

13. Verwendung nach einem der Ansprüche 11 oder 12, worin das Co-Lösungsmittel 5 bis 20 Gew.-% der Zusammensetzung bildet.

14. Desinfizierende oder antiseptische Zusammensetzung mit bakterizider Wirkung gleichzeitig gegenüber gram-negativen als auch gram-positiven Bakterien, enthaltend weder Phenolderivate noch quaternäre Ammoniumverbindungen und enthaltend als wirksames Bakterizid eine Mischung aus
(i) 2 bis 90 Gew.% mindestens eines Terpenalkohols, gegebenenfalls in Mischung mit mindestens einem Terpenkohlenwasserstoff, und
(ii) 2 bis 50 Gew.% mindestens eines nichtbakteriziden oberflächenaktiven Mittels ausgewählt aus Alkalimetall-alkylsulfaten, Alkalimetall-alkylethersulfaten, Alkalimetall-alkylsulfonaten, sekundären Alkalimetall-alkansulfonaten, Alkalimetall-alkylarylsulfonaten, Alkalimetall-α-olefinsulfonaten, Alkalimetall-alkylethersulfonaten, Alkalimetall-alkylsulfosuccinaten, Alkalimetall-alkylethersulfosuccinaten, Alkalimetallsalzen von α-sulfonierten Fettsäuren, Betainen, Alkylglucosiden, Alkylpolyglucosiden und organischen Estern von alkoxylierten nichtionischen oberflächenaktiven Mitteln,
wobei der Rest gegebenenfalls durch (iii) Wasser gebildet wird,
welche Zusammensetzung frei ist von in alkalischem Medium chelatbildenden Mitteln, quaternären Ammoniumverbindungen, germiziden Phenolverbindungen, öllöslichen organischen Säuren und Propylenglykol.

15. Zusammensetzung nach Anspruch 14, enthaltend als bakteriziden Wirkstoff eine Mischung aus
(i) 5 bis 90 Gew.-% mindestens eines Terpenalkohols, gegebenenfalls in Mischung mit mindestens einem Terpenkohlenwasserstoff, und
(ii) 5 bis 50 Gew.% mindestens eines nichtbakteriziden oberflächenaktiven Mittels ausgewählt aus Alkalimetall-alkylsulfaten, Alkalimetall-alkylethersulfaten, Alkalimetall-alkylsulfonaten, sekundären Alkalimetall-alkansulfonaten, Alkalimetall-alkylethersulfonaten, Alkalimetall-alkylarylsulfonaten, Alkylglucosiden und Alkylpolyglucosiden,
wobei der Rest gegebenenfalls durch
(iii) Wasser gebildet wird.

16. Zusammensetzung nach Anspruch 15, enthaltend (i) Pine Oil und (ii) mindestens ein oberflächenaktives Mittel ausgewählt aus Natriumlaurylethersulfaten, Natriumparaffinsulfonaten, Natriumdodecylbenzolsulfonat, Decylpolyglucosid, Natriumlaurylsulfat, Natriumlaurylethersulfosuccinat, Natriumsalzen von Alkyl-2-sulfolaurat, Natrium-α-olefinsulfonaten, Natriumalkylethersulfonaten, Natriumdialkylsulfosuccinaten, Citronensäure- oder Weinsäureester von ethoxylierter Laurinsäure und Alkylamidobetainen.

17. Zusammensetzung nach Anspruch 15 oder 16, enthaltend zusätzlich (iv) 5 bis 20 % eines nichtbakteriziden Co-Lösungsmittels.
